# FASCICULE DE BREVET EUROPEEN

(11) **EP 1 487 124 B1**
(45) Date de publication et mention de la délivrance du brevet: **21.10.2009**
(21) Numéro de dépôt: 04101721.1
(22) Date de dépôt: 26.04.2004
(51) Int. Cl.: H04B 1/38, H01Q 1/24

(54) **Procédé de controle de la puissance d'émission d'un téléphone mobile**
Verfahren zum Steuern der Sendeleistung eines Mobiltelefons
Method for controlling the transmission power of a mobile telephone

(30) Priorité: 12.06.2003 FR 0350215
(43) Date de publication de la demande: 15.12.2004
(73) Titulaire: SAGEM MOBILES, 75512 Paris (FR)
(72) Inventeur: CHARBONNIER, Philippe, 78600, LE MESNIL LE ROI (FR)
(74) Mandataire: Camus, Olivier Jean-Claude

(56) Documents cités:
- EP-A- 0 843 421
- EP-A- 0 915 572
- EP-A- 1 229 664
- WO-A-02/21710
- WO-A-94/21054
- US-A- 5 668 867

## Description

### DOMAINE TECHNIQUE DE L'INVENTION

La présente invention a pour objet un procédé de contrôle de la puissance d'émission d'un téléphone mobile. L'invention concerne également un téléphone mobile comportant les moyens nécessaires pour mettre en oeuvre un tel procédé de contrôle de sa puissance d'émission.

L'invention a notamment pour but de proposer un procédé permettant de contrôler une utilisation du téléphone mobile pour garantir à l'utilisateur un usage du téléphone sans risque pour sa santé.

Le domaine de l'invention est, d'une façon générale, celui de la téléphonie mobile. Les téléphones mobiles émettent des rayonnements électromagnétiques lors d'une communication. Les utilisateurs passent un temps croissant avec un téléphone mobile à l'oreille, ou à proximité directe du corps par exemple dans des poches de chemise ou de pantalon, et des organismes de recherche évaluent des effets possibles sur la santé. L'effet identifié à ce jour est l'échauffement thermique de zones du corps, plus particulièrement du cerveau, proches de l'appareil. On caractérise cet effet par la puissance massique absorbée thermiquement par une matière représentative des tissus biologiques placée contre l'appareil dans les conditions d'utilisation. Cette quantité est nommée DAS (débit absorption spécifique) ou SAR (Specific Absorption Rate). Elle est moyennée sur une certaine durée simulant le filtrage opéré par la matière biologique du fait de sa capacité calorifique et de l'évacuation de chaleur par la circulation sanguine. L'ICNIRP (International Commission Non lonising Radio Protection)recommande de ne pas dépasser un taux SAR de 2 watts par kilo, si seule la tête ou la poitrine est exposée aux rayonnements, et un taux SAR de 0,08 watts par kilo si l'ensemble du corps est exposé.

Aujourd'hui les téléphones mobiles utilisés pour des communications de type vocales, c'est à dire entre deux interlocuteurs qui souhaitent uniquement converser, respectent les taux ICNIRP sans grande difficulté ni surcoût. En effet la puissance émise par le téléphone mobile pour les communications de type vocales, effectuées par exemple selon la norme GSM avec un système TDMA, est actuellement au maximum de 2 watts, et dans une trame d'émission comportant typiquement 8 fenêtres temporelles, ou slots, une seule fenêtre temporelle sur les huit est effectivement utilisée pour émettre les données vocales et/ou de signalisation nécessaires à la communication. Les constructeurs de téléphones mobiles apportent également quelques améliorations par divers dispositifs, par exemple en favorisant un champ d'émission de l'antenne dans la direction opposée au cerveau, ou en écartant un peu l'antenne de la tête.

Cependant, les téléphones mobiles sont de plus en plus fréquemment utilisés pour des applications de type multimédia, et par exemple pour la transmission de fichiers électroniques tels que des photographies numériques. Pour de telles applications, on utilise fréquemment un système de transmission de type GPRS, qui, dans une trame de transmission, a la possibilité d'utiliser plus qu'une unique fenêtre temporelle. La quantité SAR est alors significativement augmentée, et peut approcher ou dépasser les normes de sécurité en vigueur. C'est également le cas pour les systèmes de communication faisant intervenir des protocoles d'émission multicodes avec la norme UMTS, fonctionnant selon un système CDMA, ou pour des systèmes de communication autorisant des émissions multifréquences. La puissance d'émission du téléphone mobile est normalement télécommandée par le réseau de télécommunication cellulaire sur lequel communique le téléphone mobile pour optimiser l'ensemble des communications en cours de la cellule où se trouve le téléphone.

Il est plausible qu'une telle transmission multimedia à fort débit, donc forte puissance, n'ait pas lieu téléphone contre la tête mais plutôt sur la table ou dans la main. Mais ce n'est pas garanti. On peut aussi recommander dans le livret utilisateur de ne pas faire de telles émissions près du corps, mais l'utilisateur risque d'oublier. Il pourra aussi y avoir des émissions de données automatiques (par exemple transmission d'une photo numérique) sans que l'utilisateur en ait conscience, alors qu'il a mis le téléphone dans sa poche. Il y a donc un besoin d'assurer avec plus de certitude le respect des niveaux ICNIRP.

### ARRIERE-PLAN TECHNOLOGIQUE DE L'INVENTION

Dans l'état de la technique, on connaît différentes solutions pour limiter la puissance d'émission lorsque l'on détecte la proximité directe d'un corps humain. Différentes réalisations de ce type de solutions sont décrites dans différents documents. On connaît notamment la demande de brevet internationale publiée sous le numéro WO 02/05443 et le brevet américain US 6,285,893. Cependant, la détection de la présence d'un corps humain n'est pas une opération aisée. Les capteurs capables de reconnaître des tissus humains sont excessivement coûteux. Les capteurs qui sont donc employés sont peu fiables, et les erreurs d'estimation sont fréquentes. On aboutit ainsi à des limitations en puissance inutiles lorsqu'un objet est reconnu à tort comme étant l'utilisateur du téléphone, ou à des autorisations d'émission à forte puissance fâcheuses, quand la présence de l'utilisateur n'a à tort pas été détectée.

On connaît également, dans l'état de la technique, différentes solutions pour maintenir l'antenne d'un téléphone aussi éloignée que possible du corps d'un utilisateur lorsque le téléphone est utilisé. Un tel exemple de réalisation est divulgué dans la demande de brevet internationale WO 02/13494. Cependant, l'éloignement proposé entre l'antenne rayonnante et l'utilisateur demeure limitée par les dimensions du téléphone mobile, et on n'envisage jamais, dans ce type de solutions, d'intervenir sur un niveau de puissance d'émission du téléphone mobile.

EP-A-0 843 421 décrit un téléphone mobile qui est capable d'émettre selon deux modes de fonctionnement et de puissance émise. Deux conditions d'utilisation sont mentionnés permettant au téléphone mobile te transférer des donnes en haut-débit et donc selon un niveau de puissance supérieur:

Lorsque que le téléphone mobile est relié à un micro-ordinateur portable via un câble de connexion, ou
lorsque que le combiné mobile, quand il s'agit d'un téléphone mobile pliable, est en position fermée.

WO 94/21054 décrit un téléphone mobile dont rayonnement est atténue par un objet de protection vers la direction de la tête d'un utilisateur du téléphone mobile.

Les solutions de limitation de puissance d'émission qui existent dans l'état de la technique ne sont donc pas des solutions satisfaisantes pour d'une part optimiser l'utilisation du téléphone mobile selon un mode d'émission présentant un niveau de rayonnement supérieur à celui recommandé lors d'une utilisation à proximité du corps humain, et d'autre part pour éviter à l'utilisateur d'être soumis à un niveau de rayonnement important lorsque son téléphone fonctionne à proximité directe de son corps, par exemple pour un mode de communication vocale.

### DESCRIPTION GENERALE DE L'INVENTION

Le procédé selon l'invention propose une solution aux problèmes et inconvénients qui viennent d'être exposés. Dans l'invention, on propose non plus de détecter la présence du corps humain pour limiter un niveau de puissance d'émission, mais de reconnaître un environnement mécanique particulier et détectable par le téléphone mobile. L'environnement mécanique particulier est inadapté, incompatible avec une utilisation du téléphone mobile à proximité directe d'une partie du corps d'un utilisateur, par exemple la tête ou le coeur, ou du corps de l'utilisateur dans son ensemble. L'environnement mécanique particulier est préalablement déterminé par le constructeur ; il peut notamment faire intervenir un objet particulier, par exemple un support de téléphone, sur lequel le téléphone est disposé de telle sorte qu'il puisse détecter avec certitude la présence dudit support, par exemple au moyen d'un premier connecteur, appartenant au téléphone mobile, et d'un deuxième connecteur, appartenant au support, les deux connecteurs étant destinés à s'emboîter l'un dans l'autre. On autorise le téléphone mobile à émettre uniquement avec un premier niveau de puissance limité tant qu'il n'a pas détecté l'environnement mécanique prédéterminé.

L'invention concerne donc essentiellement un procédé de contrôle d'une puissance émise par un téléphone mobile capable de communiquer sur un réseau de télécommunication cellulaire, ledit téléphone mobile étant capable d'émettre selon un premier mode de fonctionnement, produisant un premier ensemble de signaux dont le rayonnement est de valeur inférieure à un premier niveau de puissance, et selon au moins un deuxième mode de fonctionnement, produisant un deuxième ensemble de signaux dont la valeur du rayonnement est susceptible d'être supérieure au premier niveau de puissance, caractérisé en ce qu'il comporte l'étape consistant à :
- autoriser le téléphone mobile à émettre selon le deuxième mode de fonctionnement uniquement après la détection d'un environnement mécanique du téléphone mobile inadapté à une utilisation du téléphone mobile à proximité immédiate d'au moins une partie d'un corps d'un utilisateur du téléphone mobile.

Le procédé selon l'invention peut comporter, en plus des étapes principales qui viennent d'être mentionnées dans le paragraphe précédent, une ou plusieurs caractéristiques supplémentaires parmi les suivantes:
- le procédé comporte l'étape supplémentaire consistant à interdire au téléphone mobile d'émettre selon le deuxième mode de fonctionnement dès que le téléphone mobile quitte l'environnement mécanique inadapté à une utilisation du téléphone mobile à proximité immédiate d'au moins une partie du corps de l'utilisateur.
- l'étape de détection d'un environnement mécanique inadapté à une utilisation du téléphone mobile à proximité immédiate d'au moins une partie du corps de l'utilisateur comporte une opération de reconnaissance d'une mise en contact avec un reposoir particulier.
- le téléphone mobile comporte un capteur pour détecter une connexion entre un premier connecteur du téléphone mobile et un deuxième connecteur présent dans le reposoir.
- la connexion entre le premier connecteur du téléphone mobile et le deuxième connecteur du reposoir provoque un court circuit dans le téléphone mobile, permettant ainsi à un signal électrique de circuler et d'être interprété par un microprocesseur du téléphone mobile comme un signal de présence du reposoir.
- le reposoir intègre un chargeur du téléphone mobile.
- le reposoir est une housse de rangement du téléphone mobile ou un élément de support du téléphone mobile.
- la housse de rangement est fixée sur une ceinture et a une forme imposant un sens d'introduction du téléphone mobile dans la housse tel qu'une direction préférentielle d'émission du téléphone mobile soit une direction opposée à celle du corps d'un utilisateur lorsque la ceinture est portée par l'utilisateur.
- le premier mode de fonctionnement correspond à un système TDMA monoslot, et en ce que le deuxième mode de fonctionnement correspond à un système TDMA multislots.
- le premier mode de fonctionnement correspond à un système CDMA monocode, et en ce que le deuxième mode de fonctionnement correspond à un système CDMA multicodes.
- les étapes d'autorisation ou d'interdiction d'émission selon le deuxième mode de fonctionnement par le téléphone mobile comportent une étape de négociation, entre le téléphone mobile et le réseau de télécommunication cellulaire, d'un niveau de puissance autorisé.

La présente invention se rapporte également à un téléphone mobile, comportant des moyens de détection d'un environnement mécanique du téléphone mobile inadapté à une utilisation du téléphone mobile à proximité immédiate d'au moins une partie d'un corps d'un utilisateur du téléphone mobile, pour mettre en oeuvre le procédé comportant les étapes principales et éventuellement une ou plusieurs caractéristiques supplémentaires qui viennent d'être citées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, un premier exemple d'utilisation du téléphone mobile illustrant la mise en oeuvre du procédé selon l'invention ;
- à la figure 2, un deuxième exemple d'utilisation du téléphone mobile illustrant la mise en oeuvre du procédé selon l'invention.

### DESCRIPTION DES FORMES DE REALISATION PREFEREES DE L'INVENTION

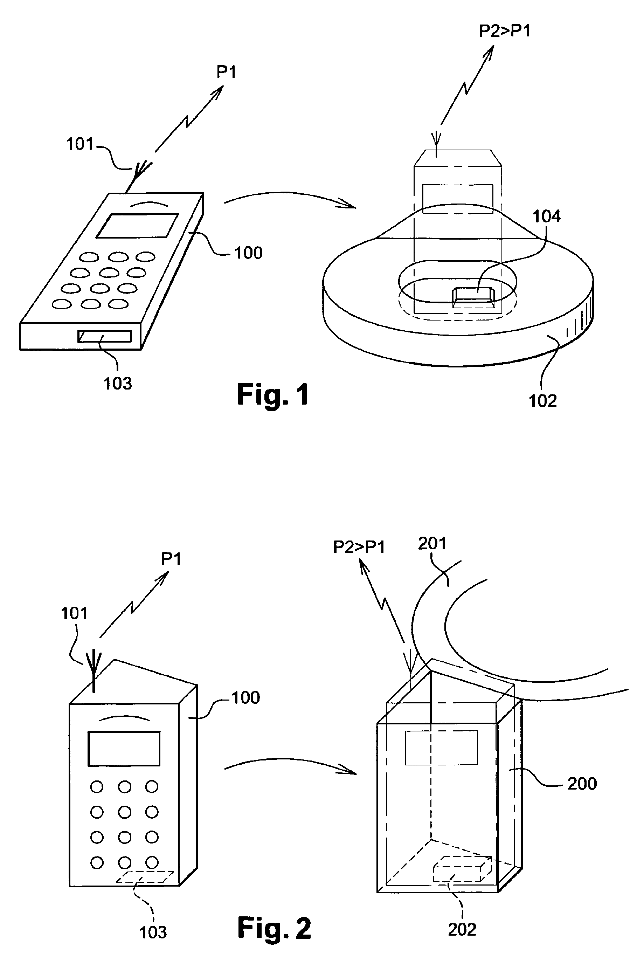

A la figure 1, on a représenté un téléphone mobile 100, équipé notamment d'une antenne 101 pour émettre et recevoir un ensemble de signaux de communication. L'antenne 101 représentée est symboliquement une antenne externe, mais elle pourrait être disposée au sein du boîtier du téléphone mobile 100. Sur la partie gauche de la figure 1, le téléphone mobile 100 est dans une position habituelle d'utilisation ; un utilisateur peut le prendre en main et le porter à son oreille sans difficulté.

Sur la partie droite de la figure 1, on a représenté un support 102 du téléphone mobile. Le support 102 est destiné à recevoir le téléphone mobile 100 pour rendre ce dernier facilement accessible. Le support 102 peut en outre comporter des moyens de fixation à la surface sur laquelle il est posé, de telle sorte qu'il constitue un lieu de rangement habituel du téléphone mobile 100.

Lorsque le téléphone mobile 100 n'est pas disposé sur le support 102, qui constitue un environnement mécanique particulier, il fonctionne dans un premier mode dans lequel les signaux émis ont une puissance limitée à une première valeur P1. La détermination de la valeur P1 peut par exemple se faire de telle sorte qu'elle respecte la quantité SAR imposée par les différents tests de sécurité en vigueur.

Lorsque le téléphone mobile est disposé sur le support 102, il est autorisé à fonctionner dans un deuxième mode dans lequel les signaux émis ont une puissance pouvant atteindre une deuxième valeur P2, supérieure à la première valeur P1.

Le support 102 constitue un environnement mécanique particulier du téléphone mobile 100. C'est sa détection par le téléphone mobile 100 qui autorise ce dernier à émettre selon un deuxième mode de fonctionnement. La détection de l'environnement mécanique particulier 102 peut se faire par tout moyen, par exemple en utilisant des ondes radio à faible portée, des signaux infra-rouge... Dans l'exemple illustré à la figure 1, on a prévu d'utiliser un premier connecteur 103 du téléphone mobile, qui peut par exemple être le connecteur de bas de poste habituellement présent sur les téléphones mobiles, notamment pour procéder à un rechargement de la batterie, et un deuxième connecteur 104 disposé sur le support 102.

Dans l'exemple illustré, c'est l'emboîtement du deuxième connecteur 104 dans le premier connecteur 103 qui permet au téléphone mobile 100 de reconnaître l'environnement mécanique particulier l'autorisant à émettre selon un deuxième mode de fonctionnement. A cet effet, l'emboîtement des deux connecteurs peut par exemple provoquer la fermeture d'un interrupteur, ou provoquer un court-circuit au niveau du premier connecteur 103, pour laisser circuler un signal électrique interprétable par un microprocesseur du téléphone mobile 100, qui peut ainsi déduire la présence de l'environnement mécanique particulier. Dans un mode de réalisation particulier, le deuxième connecteur 104 est également utilisé pour la recharge du téléphone mobile 100.

L'encombrement assuré par le support 102 apporte une garantie que le téléphone mobile est situé au moins à quelques centimètres du corps de l'utilisateur. Cet encombrement est encore augmenté lorsque le support 102 est solidarisé avec une table ou un tableau de bord de voiture.

A la figure 2, le téléphone mobile 100 est destiné à être placé dans une housse, un étui, 200, constituant un environnement mécanique particulier qui doit pouvoir être détecté par le téléphone mobile. Là encore, dans l'exemple illustré, c'est l'emboîtement d'un deuxième connecteur 202, disposé au fond de la housse 200, dans le premier connecteur 103 qui permet au téléphone mobile 100 de reconnaître l'environnement mécanique particulier l'autorisant à émettre selon un deuxième mode de fonctionnement.

Si la housse 200 est fixée sur une ceinture 201, on peut prévoir que la housse 200 a une forme particulière, correspondant à une forme particulière du téléphone mobile 100, de telle sorte que le sens d'insertion soit imposé. Dans un autre exemple de réalisation, c'est la position et/ou l'orientation du deuxième connecteur 202 au fond de la housse 200 qui permet de déterminer un sens d'introduction imposé.

Le sens d'insertion imposé permet de disposer le téléphone mobile 100 dans la housse 200 de telle sorte que la direction préférentielle de rayonnement, qui correspond à la direction selon laquelle sont émis la plus grande partie des signaux, soit dirigée dans une direction opposée à celle du corps autour duquel est placé la ceinture. Une plaque isolante peut par ailleurs être disposée dans la housse 200 entre le téléphone mobile et le corps de l'utilisateur.

Dans des modes de mise en oeuvre particulier du procédé selon l'invention, on peut prévoir différents environnements mécaniques particuliers distincts qui sont détectables par le téléphone mobile 100, chaque environnement mécanique particulier permettant, après détection, au téléphone mobile d'émettre selon un mode d'émission, associé à un niveau de puissance autorisé, spécifiquement autorisé pour chaque environnement mécanique particulier considéré.

Par exemple, dans les exemples illustrés, les deuxièmes connecteurs 104 et 202 peuvent être différents, le téléphone mobile comportant des moyens pour détecter cette différence et autoriser en conséquence des niveaux de puissance d'émission différents. En l'occurrence, on choisirait avantageusement un niveau d'émission plus important dans le cas du support 102 que dans le cas de la housse 200 disposée sur la ceinture 201, car on est assuré, dans le premier cas, que le téléphone mobile 100 n'est pas à proximité directe de la totalité d'un corps d'un utilisateur, alors que dans le deuxième cas, on est juste assuré que le téléphone mobile 100 n'est pas à proximité d'un organe sensible de type cerveau ou coeur.

## Revendications

1. Procédé de contrôle d'une puissance émise par un téléphone mobile (100) capable de communiquer sur un réseau de télécommunication cellulaire, ledit téléphone mobile (100) étant capable d'émettre selon un premier mode de fonctionnement, produisant un premier ensemble de signaux dont le rayonnement est de valeur inférieure à un premier niveau de puissance (P1), et selon au moins un deuxième mode de fonctionnement, produisant un deuxième ensemble de signaux dont la valeur du rayonnement est susceptible d'être supérieure au premier niveau de puissance (P1), **caractérisé en ce qu'**il comporte l'étape consistant à :
- autoriser le téléphone mobile (100) à émettre selon le deuxième mode de fonctionnement uniquement après la détection d'un environnement mécanique (102 ;200) du téléphone mobile inadapté à une utilisation du téléphone mobile à proximité immédiate d'au moins une partie d'un corps d'un utilisateur du téléphone mobile.

2. Procédé selon la revendication précédente **caractérisé en ce qu'**il comporte l'étape supplémentaire consistant à interdire au téléphone mobile (100) d'émettre selon le deuxième mode de fonctionnement dès que le téléphone mobile quitte l'environnement mécanique (102 ;200) inadapté à une utilisation du téléphone mobile à proximité immédiate d'au moins une partie du corps de l'utilisateur.

3. Procédé selon l'une au moins des revendications précédentes **caractérisé en ce que** l'étape de détection d'un environnement mécanique (102 ;200) inadapté à une utilisation du téléphone mobile à proximité immédiate d'au moins une partie du corps de l'utilisateur comporte une opération de reconnaissance d'une mise en contact avec un reposoir (102 ;200) particulier.

4. Procédé selon la revendication précédente **caractérisé en ce que** le téléphone mobile (100) comporte un capteur pour détecter une connexion entre un premier connecteur (103) du téléphone mobile et un deuxième connecteur (104) présent dans le reposoir (102 ;200).

5. Procédé selon la revendication précédente **caractérisé en ce que** la connexion entre le premier connecteur (103) du téléphone mobile (100) et le deuxième connecteur (104 ;202) du reposoir (102 ;200) provoque un court circuit dans le téléphone mobile, permettant ainsi à un signal électrique de circuler et d'être interprété par un microprocesseur du téléphone mobile comme un signal de présence du reposoir (102 ;200).

6. Procédé selon l'une au moins des revendications 3 à 5 **caractérisé en ce que** le reposoir est un élément de support (102) du téléphone mobile (100).

7. Procédé selon l'une au moins des revendications 3 à 6 **caractérisé en ce que** le reposoir intègre un chargeur du téléphone mobile (100).

8. Procédé selon l'une au moins des revendications 3 à 6 **caractérisé en ce que** le reposoir est une housse de rangement (200) du téléphone mobile (100).

9. Procédé selon la revendication précédente **caractérisé en ce que** la housse de rangement (200) est fixée sur une ceinture (201) et a une forme imposant un sens d'introduction du téléphone mobile (100) dans la housse tel qu'une direction préférentielle d'émission du téléphone mobile soit une direction opposée à celle du corps d'un utilisateur lorsque la ceinture est portée par l'utilisateur.

10. Procédé selon l'une au moins des revendications précédentes **caractérisé en ce que** le premier mode de fonctionnement correspond à un système TDMA monoslot, et **en ce que** le deuxième mode de fonctionnement correspond à un système TDMA multislots.

11. Procédé selon l'une au moins des revendications 1 à 9 **caractérisé en ce que** le premier mode de fonctionnement correspond à un système CDMA monocodes, et **en ce que** le deuxième mode de fonctionnement correspond à un système CDMA multicode.

12. Procédé selon l'une au moins des revendications 2 à 11 **caractérisé en ce que** les étapes d'autorisation ou d'interdiction d'émission par le téléphone mobile (100) selon le deuxième mode de fonctionnement comportent une étape de négociation, entre le téléphone mobile et le réseau de télécommunication cellulaire, d'un niveau de puissance autorisé.

13. Téléphone mobile (100), comportant des moyens de détection d'un environnement mécanique (102 ;204) du téléphone mobile inadapté à une utilisation du téléphone mobile à proximité immédiate d'au moins une partie d'un corps d'un utilisateur du téléphone mobile, pour mettre en oeuvre le procédé selon l'une des revendications précédentes.

## Claims

1. A method for controlling transmission power of a mobile telephone (100) capable of communicating over a cellular telecommunication network, said mobile telephone (100) being capable of transmitting according to a first mode of operation, producing a first set of signals with a radiation value lower than a first power level (P1), and according to at least one second mode of operation, producing a second set of signals whose radiation value is likely to be higher than first power level (P1), **characterised in that** it includes the step consisting in:
- authorising mobile telephone (100) to transmit according to the second mode of operation, only after detecting a mechanical environment (102; 200) of the mobile telephone, in which it is unsuitable for the mobile telephone to be used in the immediate proximity of at least one part of a mobile telephone user's body.

2. A method according to the previous claim, **characterised in that** it includes the additional step consisting in prohibiting mobile telephone (100) from transmitting according to the second mode of operation as soon as the mobile telephone leaves mechanical environment (102; 200), in which it is unsuitable for the mobile telephone to be used in the immediate proximity of at least one part of a mobile telephone user's body.

3. A method according to at least one of the previous claims, **characterised in that** the step of detecting a mechanical environment (102; 200), in which it is unsuitable for the mobile telephone to be used in the immediate proximity of at least one part of a mobile telephone user's body includes an operation recognising contact with a particular stand (102; 200).

4. A method according to the previous claim, **characterised in that** mobile telephone (100) includes a sensor for detecting a connection between a first connector (103) of the mobile telephone and a second connector (104) present in stand (102; 200).

5. A method according to the previous claim, **characterised in that** the connection between first connector (103) of mobile telephone (100) and second connector (104; 202) of stand (102; 200) causes a short circuit in the mobile telephone, thus enabling an electric signal to circulate and be interpreted by a microprocessor of the mobile telephone as a signal indicating the presence of stand (102; 200).

6. A method according to at least one of claims 3 to 5, **characterised in that** the stand is a supporting element (102) of mobile telephone (100).

7. A method according to at least one of claims 3 to 6, **characterised in that** the stand integrates a charger for mobile telephone (100).

8. A method according to at least one of claims 3 to 6, **characterised in that** the stand is a storage case (200) for mobile telephone (100).

9. A method according to the previous claim, **characterised in that** storage case (200) is attached to a belt (201) and has a shape imposing a direction for introducing mobile telephone (100) into the case such as a preferential direction of transmission of the mobile telephone, that is to say a direction opposed to that of the user's body when the belt is worn by the user.

10. A method according to at least one of the previous claims, **characterised in that** the first mode of operation corresponds to a monoslot TDMA system, and **in that** the second mode of operation corresponds to a multislot TDMA system.

11. A method according to at least one of claims 1 to 9, **characterised in that** the first mode of operation corresponds to a monocode CDMA system, and **in that** the second mode of operation corresponds to a multicode CDMA system.

12. A method according to at least one of claims 2 to 11, **characterised in that** the authorisation or prohibition steps for transmitting by mobile telephone (100) according to the second mode of operation includes a step of negotiating an authorised power level between the mobile telephone and the cellular telecommunications network.

13. A mobile telephone (100), including means for detecting a mechanical environment (102; 204) of the mobile telephone, in which it is unsuitable for the mobile telephone to be used in the immediate proximity of at least one part of a mobile telephone user's body, in order to implement the method according to one of the previous claims.

## Patentansprüche

1. Verfahren zur Kontrolle einer Leistung, die von einem Mobiltelefon (100) ausgestrahlt wird, das in der Lage ist, in einem Funkfernmeldenetz zu kommunizieren, wobei das besagte Mobiltelefon (100) in der Lage ist, entsprechend einem ersten Betriebsmodus zu senden, und eine erste Einheit an Signalen zu erzeugen, deren Strahlung einen geringeren Wert aufweist, als ein erstes Leistungsniveau (P1), und zumindest entsprechend einem zweiten Betriebsmodus zur Erzeugung einer zweiten Einheit an Signalen, deren Strahlungswert eventuell über dem ersten Leistungsniveau (P1) liegt, **dadurch gekennzeichnet, dass** es den Schritt enthält, der darin besteht:
- das Mobiltelefon (100) zu befugen, entsprechend dem zweiten Betriebsmodus nur nach Erfassung eines mechanischen Umfeldes (102, 200) des Mobiltelefons zu senden, das für eine Verwendung des Mobiltelefons in unmittelbarer Nähe zumindest eines Körperteils eines Mobiltelefonbenutzers ungeeignet ist.

2. Verfahren nach dem vorherigen Anspruch, **dadurch gekennzeichnet, dass** es den zusätzlichen Schritt enthält, der darin besteht, dem Mobiltelefon (100) zu untersagen, entsprechend dem zweiten Betriebsmodus zu senden, sobald das Mobiltelefon das mechanische Umfeld (102, 200) verlässt, das für eine Verwendung des Mobiltelefons in unmittelbarer Nähe zumindest eines Körperteils des Benutzers ungeeignet ist.

3. Verfahren nach zumindest einem der vorherigen Ansprüche, **dadurch gekennzeichnet, dass** der Schritt zur Erfassung eines mechanischen Umfeldes (102, 200), das für eine Verwendung des Mobiltelefons in unmittelbarer Nähe zumindest eines Körperteils des Benutzers ungeeignet ist, einen Erkennungsvorgang für eine Kontaktaufnahme mit einer besonderen Ablage (102, 200) enthält.

4. Verfahren nach dem vorherigen Anspruch, **dadurch gekennzeichnet, dass** das Mobiltelefon (100) einen Sensor zur Erfassung einer Verbindung zwischen einem ersten Stecker (103) des Mobiltelefons und einem zweiten Stecker (104), der in der Aufnahme (102, 200) vorhanden ist, enthält.

5. Verfahren nach dem vorherigen Anspruch, **dadurch gekennzeichnet, dass** die Verbindung zwischen dem ersten Stecker (103) des Mobiltelefons (100) und dem zweiten Stecker (104, 202) der Aufnahme (102, 200) zu einem Kurzschluss im Mobiltelefon führt, wodurch ein elektrisches Signal zirkulieren, und von einem Mikroprozessor im Mobiltelefon als Signal für das Vorhandensein der Aufnahme (102, 200) ausgewertet und interpretiert werden kann.

6. Verfahren nach zumindest einem der Ansprüche 3 bis 5, **dadurch gekennzeichnet, dass** die Aufnahme ein Element der Halterung (102) des Mobiltelefons (100) ist.

7. Verfahren nach zumindest einem der Ansprüche 3 bis 6, **dadurch gekennzeichnet, dass** die Aufnahme ein Ladegerät für das Mobiltelefon (100) einbezieht.

8. Verfahren nach zumindest einem der Ansprüche 3 bis 6, **dadurch gekennzeichnet, dass** die Aufnahme eine Schutzhülle (200) des Mobiltelefons (100) ist.

9. Verfahren nach dem vorherigen Anspruch, **dadurch gekennzeichnet, dass** die Schutzhülle (200) an einem Gürtel (201) befestigt ist und eine Form aufweist, die die Einführrichtung des Mobiltelefons (100) in die Hülle vorgibt, sodass eine bevorzugte Senderichtung des Mobiltelefons eine Richtung ist, die vom Körper eines Benutzers wegführt, wenn der Benutzer den Gürtel trägt.

10. Verfahren nach zumindest einem der vorherigen Ansprüche, **dadurch gekennzeichnet, dass** der erste Betriebsmodus einem TDMA Monoslot System, und der zweite Betriebsmodus einem TDMA Multislots System entsprechen.

11. Verfahren nach zumindest einem der Ansprüche 1 bis 9, **dadurch gekennzeichnet, dass** der erste Betriebsmodus einem CDMA Mono-Code System, und der zweite Betriebsmodus einem CDMA Multi-Code System entsprechen.

12. Verfahren nach zumindest einem der Ansprüche 2 bis 11, **dadurch gekennzeichnet, dass** die Schritte der Befugnis oder des Verbotes zum Senden des Mobiltelefons (100) entsprechend dem zweiten Betriebsmodus einen Verhandlungsschritt zwischen dem Mobiltelefon und dem Funkfernmeldenetz über das zulässige Leistungsniveau enthalten.

13. Mobiltelefon (100) mit Mitteln zur Erfassung eines mechanischen Umfeldes (102, 204) des Mobiltelefons, das für eine Verwendung des Mobiltelefons in unmittelbarer Nähe zumindest eines Körperteils eines Mobiltelefonbenutzers ungeeignet ist, um das Verfahren entsprechend einem der vorherigen Ansprüche umzusetzen.
